# EUROPEAN PATENT SPECIFICATION

(11) **EP 4 315 301 B1**
(45) Date of publication and mention of the grant of the patent: **12.02.2025**
(21) Application number: 22718601.2
(22) Date of filing: 24.03.2022
(51) Int. Cl.: G09B 5/02, G09B 19/00, A63H 33/04

(54) **LIGHT MATRIX BUILDING BLOCK FOR A MODULAR TOY OR EDUCATIONAL CONSTRUCTION SET**
LEICHTBAU-MATRIX FÜR EIN MODULARES SPIELZEUG ODER EIN ERZIEHERISCHES BAUSET
BLOC DE CONSTRUCTION À MATRICE LÉGÈRE POUR UN JOUET MODULAIRE OU ENSEMBLE DE CONSTRUCTION ÉDUCATIVE

(30) Priority: 25.03.2021 DK PA202170131
(43) Date of publication of application: 07.02.2024
(73) Proprietor: LEGO A/S, 7190 Billund (DK)
(72) Inventor: WALLINGTON, Oliver, 7190 Billund (DK); CHRISTOFFERSEN, Per, 7190 Billund (DK)
(74) Representative: Guardian IP Consulting I/S
(86) International application number: PCT/EP2022/057791
(87) International publication number: WO 2022/200510

(56) References cited:
- WO-A1-2010/023070
- US-A1- 2013 217 294
- US-A1- 2020 296 167
- US-A1- 2020 376 402

## Description

### TECHNICAL FIELD

The present disclosure relates to building blocks for a modular toy or educational construction set, in particular to a light matrix building block having a plurality of separate light emitting elements, a modular toy or educational construction set comprising a light matrix building block and a building block device electronically connected with each other, and a method of communication between a light matrix building block and a building block device.

### BACKGROUND

Modular toy or educational construction sets provide a way for young children, adolescents and adults alike to play and experiment by exploring and utilising the ways in which the modules may be put together.

More and more of such construction sets have building blocks comprising electronic parts, which may electronically connect with each other and comprise building blocks, which are also sensors, batteries, actuators, light modules, etc. A challenge for modular construction sets comprising electronic parts is size and durability. The electronic parts often need to have a small form factor, and the modules are required to withstand being assembled and dissembled numerous times.

To facilitate play and learning the different modules should be able to fit together in multiple ways and, where needed, to exchange digital information quickly such that the play or learning experience is smooth and uninterrupted. For some electronic modules the digital communication between them or to/from an app may with some advantages be made using a wireless communication protocol, which has the disadvantage of being slower than a wired connection. A construction which is capable of communicating information to and from the user, for example via an app, or via sensory outputs from one or more building blocks, such as e.g. vibration, sound or light, requires a significant amount of digital information to be transmitted.

There is thus a need for modules for modular toy or educational construction sets to be able to communicate information to each other quickly, and for modules, which can connect with each other in a variety of ways.

Document US2020376402 discloses a toy construction robotics system including a robotics control unit, the robotics control unit comprising: a housing comprising coupling elements configured for releasably interconnecting the robotics control unit with cooperating toy construction elements; a processor comprising programmed instructions; a plurality of I/O-ports connected to communicate with the processor; a plurality of separate light emitters arranged in a two-dimensional array on a front side of the housing, each of the light emitters being operable in response to instructions from the processor so as to produce at least two different indicator states.

### SUMMARY

It is an object of some embodiments to solve or mitigate, alleviate, or eliminate at least some of the above or other challenges.

In a first aspect is provided a light matrix building block for a modular toy or educational construction set, in a second aspect is provided a modular toy or educational construction set comprising a light matrix building block according to the first aspect and a building block device, and in a third aspect is provided a method of communication between a light matrix building block and a building block device. In the different aspects, the features having the same name have a similar function and therefore the descriptions and explanations of features in any aspect apply to those features in any another aspect. According to the first aspect is provided a light matrix building block for a modular toy or educational construction set. The light matrix building block comprises a plurality of separate light emitting elements and is configured to:
- control the colour and intensity of each of the light emitting elements individually, and
- receive and decode digital information to regulate the colour and intensity of each of the light emitting elements,
wherein the digital information to regulate the colour and intensity of a light emitting element in the plurality of light emitting elements is encoded in a single byte of information.

A building block for a modular construction set has one or more attachment parts designed to allow the building block to interlock with one or more other building blocks. The attachment parts of different building blocks may be similar or may be different, but designed so as to allow the building blocks to adhere to or grip each other. The light matrix building block may, for example, interlock with one or more simple non-electronic building blocks, one or more other light matrix building block and/or other building blocks comprising electronic parts.

The plurality of light emitting elements may be arranged on a 2D grid such as a grid defining, for example, a rectangle, a square, a circle, etc. If the grid is in a rectangular or square shape, the light matrix may be a square matrix, i.e. have the same number of lights in its rows and columns, e.g. a 2x2, 3x3, 4x4, etc. The separate light emitting elements may be LEDs, and they may be of the same type and/or model, or different.

As the colour and intensity of each of the light emitting elements is controlled individually, some or all of the light emitting elements may be on or off at a given time.

The light matrix building block can receive digital information and has processing power to decode the digital information to regulate the colour and intensity of each of the light emitting elements, for example as requested directly by a user or by a software program. By regulate is meant that the colour and intensity is set appropriately, i.e. the colour may be changed, the intensity may be increased or decreased, or the light turned off (intensity = zero).

The digital information to regulate the colour and intensity of each individual light emitting element is encoded in a single byte of information, which allows the light matrix building block to quickly and, at least to the human eye, simultaneously regulate the colour and intensity of all of the plurality of light emitting elements in response to the information encoded in the single byte, i.e. 8 bits, of information. To increase the number of colours available and reduce the bits needed to provide the coded information to regulate intensity and colour, the intensity and colour coded information may be provided as an indexed intensity and indexed colour, respectively. For example, the intensity coded information and colour coded information may each be encoded in 4 bits.

The light matrix building block may be configured to receive the digital information wirelessly or via a wired connection. A wired connection may be formed as part of the one or more attachment parts, which allow the light matrix building block to interlock with other building blocks, or it may be, for example, an electric cable with a connector at the end for electronically connecting to another entity. The light matrix building block may connect with a building block device, i.e. a building block comprising electronic parts and having a technical function, such as e.g. a battery, a sensor, etc. When the light matrix building block is connected to a building block device, it may act and respond in a suitable manner. To this end, the light matrix building block may be further configured to determine whether an electronically connected building block device can provide power to a connected building block, and whether the connected building block device is configured for digital communication. For example, the light matrix building block may regulate the colour and intensity of each of the light emitting elements according to a status of a connected building block device such as: power level of a battery, polarity of power supplied, sensor value, whether device is on/off, transmitting, recording, updating, etc.

According to the second aspect, a modular toy or educational construction set comprising a light matrix building block according to the first aspect and a building block device is provided. The light matrix building block and the building block device are each configured to be electronically connected with each other.

In an embodiment, the building block device is a building block hub device, which is configured to encode digital information intended for the light matrix building block. A hub device can connect, wirelessly or cabled, to a plurality of other devices and transfer data between the devices connected to it. If the light matrix building block is not capable of wireless communication, it may be connected via a cable to a hub device that is configured for wireless communication, which can then transfer data it has received wirelessly to the light matrix building block. Thus, in an embodiment, the building block device is a hub device, which is configured to wirelessly receive digital information intended for the light matrix building block. Advantageously, the wireless communication, which the hub device is configured for, could be Bluetooth Low Energy (BLE) as this considerably reduces power consumption partially because of the small packets transmitted compared to classic Bluetooth, while maintaining a similar communication range to that of classic Bluetooth. In the Bluetooth 4.0 Low Energy packet structure, the maximum payload in a single message is 20 bytes. In the Bluetooth 4.2 and 5.0 Low Energy packet structure, the maximum payload, i.e. maximum number of bytes used for message content, in a single message is 246 bytes when using so-called Data Length Extension (DLE). Using DLE will, however, lead to longer airtime, which increases the chance of a transmission failing and packets needing to be retransmitted. The longer a Bluetooth message is, the more time it will take to transmit, and therefore, for fast and reliable transmission it is advantageous to reduce the size of the BLE message. Thus, in an embodiment, the building block hub device is further configured to receive the digital information intended for the light matrix building block as a single Bluetooth Low Energy (BLE) message. This synergizes well with the colour and intensity of a light emitting element being encoded in a single byte of information.

In another embodiment, the building block device is a building block battery device, i.e. is a building block and therefore has attachment parts, which allow it to interlock with other building blocks having suitable attachment parts, and it is a battery device. A battery device stores energy and is able to supply power to building block devices connected to it. Some building block battery devices will further be configured for digital communication and will then be referred to as a smart battery device. The light matrix building block may be further configured to detect that it is connected to a battery device. In some embodiments, the light matrix building block is further configured to detect whether a device it is connected to is configured for digital communication. In some embodiments, the light matrix building block is further configured to detect the polarity of a connected battery device.

According to the third aspect, a method of communication between a light matrix building block and a building block device is provided. The light matrix building block comprises a plurality of separate light emitting elements, and is configured to control the colour and intensity of each of the light emitting elements individually. The method comprises:
- providing, by the building block device, digital information to the light matrix building block,
- receiving and decoding, by the light matrix building block, of the digital information provided by the building block device,
- regulating, by the light matrix building block, the colour and intensity of each of the light emitting elements according to the received digital information,
wherein the digital information to regulate the colour and intensity of a light emitting element in the plurality of light emitting elements is encoded in a single byte of information.

In an embodiment, the intensity and colour coded information is provided as an indexed intensity and indexed colour, respectively.

In another embodiment, the intensity coded information and colour coded information are each encoded in 4 bits.

Additional features and advantages will be made apparent from the following detailed description with reference to the accompanying drawings.

### BRIEF DESCRIPTION OF THE FIGURES

In the following, exemplary embodiments of the invention are described in more detail with reference to the appended drawings, wherein:
Fig. 1 shows a drawing of a light matrix building block according to an embodiment,
Figs. 2-5 shows schematic drawings of a light matrix building block and a building block device according to some embodiments, and
Fig. 6 shows a flow diagram of a method of communication between a light matrix building block and a building block device according to some embodiments.

### DETAILED DESCRIPTION

Embodiments of the present disclosure will be described and exemplified more fully hereinafter with reference to the accompanying drawings. The description disclosed herein can, however, be realized in many different forms and should not be construed as being limited to the embodiments set forth herein. The skilled person will understand that the accompanying drawings are schematic and simplified for clarity and therefore merely show details which are essential to the understanding of the invention, while other details have been left out. Like reference numerals refer to like elements throughout. Like elements will therefore not necessarily be described in detail with respect to each figure.

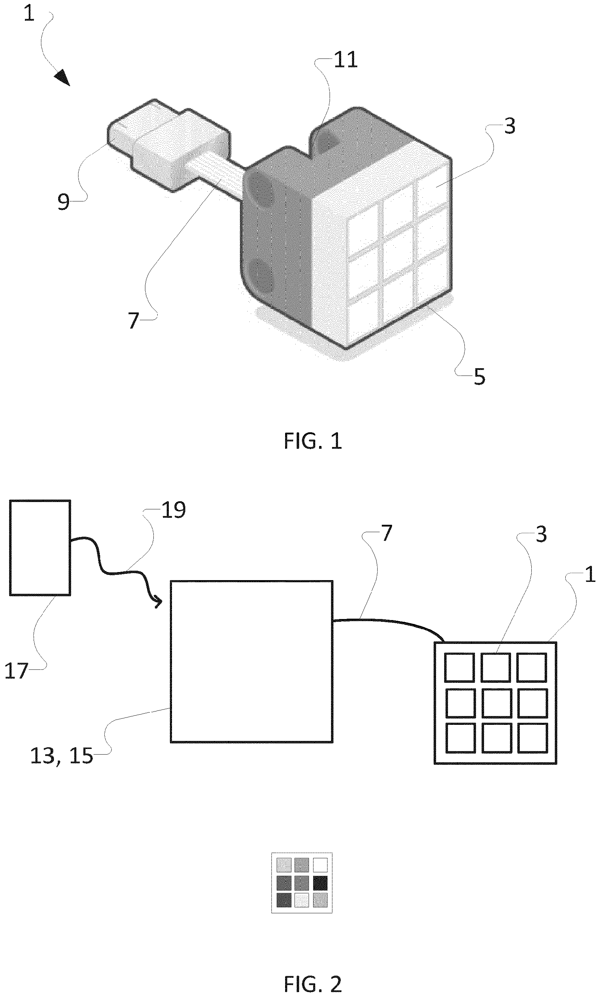

Fig. 1 shows a drawing of a light matrix building block 1 according to an embodiment. The light matrix building block 1 has a 3x3 matrix 5 of separate LEDs totalling nine light emitting elements 3. The light matrix building block has various attachment parts 11 allowing it to interlock with other building blocks having suitable attachment parts. A connection cable 7 with a connector 9 at the end enables the light matrix building block 1 to electronically connect with another device and allows for power to be supplied to the light matrix building block 1 as well as digital communication between connected devices, if supported.

The colour and intensity of each of the light emitting elements 3 can be controlled individually by a controller within the light matrix building element 1. The light emitting elements 3 can produce a plurality of colours at a plurality of intensities, where both colour and intensity are controlled separately for each light emitting element 3. The digital information containing the instructions on the colour and intensity setting for each light emitting element 3 is provided to the light matrix building block 1 via the connection cable 7 or via a wireless connection. To enable the light matrix 5 to update quickly even where the digital information encoding for colour and intensity of each light emitting element 3 is transmitted using the Bluetooth Low Energy protocol, either directly to the light matrix building block 1 or to a device connected to the light matrix building block via the connection cable 7, the digital information to regulate the colour and intensity of a light emitting element is encoded in a single byte. After receiving the digital information, the light matrix building block 1 decodes the nine bytes of data required to update the colour and intensity setting of the nine LEDSs in the light matrix 5.

Figs. 2-5 shows schematic drawings of a light matrix building block 1 and a building block device 13 according to some embodiments. In connection with each figure will be described a way in which a light matrix building block 1 via its light emitting elements can be used to provide a desired visual output. The visual output may be perceived by a person or received by a device, e.g. a camera, or a sensor.

Figs. 2-5 show schematic drawings of a light matrix building block 1 and a building block device 13 connected through a wired connection 7. As in the embodiment shown in fig. 1, the light matrix building block 1 has a 3x3 matrix 5 of separate LEDs 3 totalling nine light emitting elements 3. The building block device 13 is an electronic device that is also a building block, i.e. it has attachment parts (not shown), which allow it to interlock with other building blocks having suitable attachment parts.

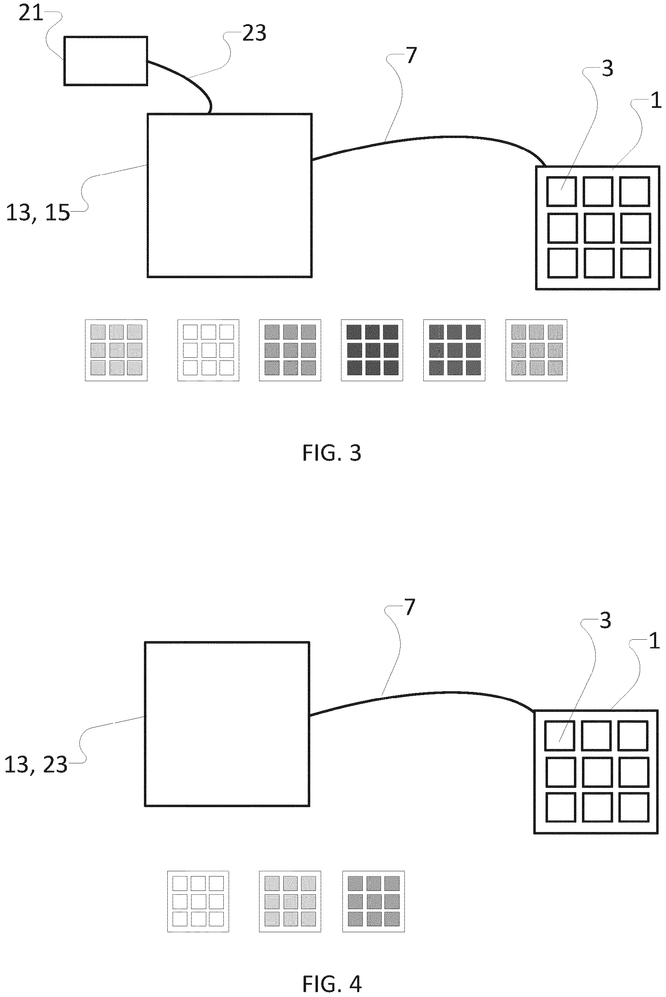

The building block device 13 in figs. 2 and 3 is a building block hub device 15, which can communicate with, and facilitate communication between, the light matrix building block 1 and other devices such as e.g. other building block devices, tablets, computers, mobile phones etc. A building block hub device 15 can generally be configured for either wired or wireless communication, or both. Thus, it is able to receive digital information intended for the light matrix building block 1.

In the embodiment in fig. 2 the building block hub device 15 is connected to a tablet 17 via a wireless connection 19 using the BLE protocol through which it receives instructions intended for the light matrix building block 1. The hub device 15 transmits the digital information it received from the tablet 17 to the light matrix building block 1 via the connection cable 7, the light matrix building block 1 decodes the information and regulates the colour and intensity of each light emitting element 3 accordingly.

The information from the tablet 17 is transmitted using the BLE protocol, and the tablet 17 could instead be e.g. a computer, or other building block device capable of communicating wirelessly using the BLE protocol. By encoding the information for each light emitting element 3 in a single byte, it is possible to update all nine light emitting elements 3 of the light matrix 5 using a single BLE message, which allows for a quick update.

Below the schematic of the hardware in fig. 2 is illustrated the light matrix 5 with the LEDs 3 all having different colours and different intensities, which is possible because all the light emitting elements 3 are controlled individually. The colours could be e.g. light blue, red, yellow, green, blue, purple, teal, pink, white, etc., which is illustrated as different shades of grey. The setup shown in fig. 2 allows for a fast and reliable high level of control of the light matrix 5.

As an example, the colour and intensity of each light emitting element 3 may be provided in the encoding as an indexed intensity and indexed colour, respectively, where four bits could provide the index for the colour and four bits provide the index for the intensity:

| Intensity | | | | Colour | | | |
|---|---|---|---|---|---|---|---|
| Bit 7 | Bit 6 | Bit 5 | Bit 4 | Bit 3 | Bit 2 | Bit 1 | Bit 0 |
| 0/1 | 0/1 | 0/1 | 0/1 | 0/1 | 0/1 | 0/1 | 0/1 |

Each of the values of the colour index corresponds to a particular distinct colour. The intensity index, however, could be provided as a gamma-level table with the four bits providing the index for the level, such as (for an index with 10 standard intensity levels):

| | | | | | | | | | | | |
|---|---|---|---|---|---|---|---|---|---|---|---|
| Level | 1 | 2 | 3 | 4 | 5 | 6 | 7 | 8 | 9 | 10 | OFF |
| Factor | 2 | 6 | 14 | 27 | 45 | 69 | 101 | 140 | 189 | 255 | 0 |

To calculate the final RGB-value, the intensity factor is divided by its max and multiplied with each RGB-value, i.e. in the example above the intensity is calculated as factor/255 and then multiplied with each RGB value. For example, if the colour selected has RGB = (0, 160, 30) and the intensity index is 6 then the final RGB-value is (0, 69/255*160, 69/255*30) = (0, 43, 8).

In the embodiment in fig. 3 is illustrated at the bottom six examples, where all the light emitting elements are the same colour and have the same intensity. The possible colours could be e.g. light blue, red, yellow, green, blue, purple, teal, pink, white, etc., which is illustrated in fig. 3 as different shades of grey. All the light emitting elements 3 having the same colour and intensity is useful when the hub device 15 receives a signal from a connected building block device, for example a building block sensor 21, which outputs a discrete value to be visualized by the light matrix 5. The discrete single value is then visualized using the colour index as described above with all the light emitting elements 3 having the same colour.

The connected device, e.g. sensor 21, may send a signal formatted to conform with the encoding wherein the information to regulate the colour and intensity of each light emitting element 3 is encoded in a single byte of information. Alternatively, the connected device 21 sends it's discrete value to the hub device 15 via the connection 23, and the hub device 15 then encodes the information for the light matrix building block 1. As a further alternative, or additionally, the light matrix building block 1 may be further configured to receive and decode the discrete value signal directly from the building block sensor 21 via the hub device 15 to produce the described visualization of the discrete value.

In the embodiment in fig. 4, the building block device 13 is a simple building block battery device 23 that does not have the capability for digital communication. The light matrix building block 1 is configured to detect via the cable 7 that it is connected to a battery device that can supply it with power and further that the battery device is not configured for digital communication. When connected with this type of simple building block battery device 23, the light matrix building block 1 will detect the polarity of the battery and visualize it, for example by having all the light emitting elements 3 be a green colour for a positive polarity and a red colour for a negative polarity. At the bottom of fig. 4 is illustrated three instances of the light matrix 5 with the light emitting elements 3 all having the same colour and intensity. To the far left the light matrix 5 is turned off before it is connected to the simple battery device 23, whereas the other two light matrices 5 represents the light matrix building block 1 detecting and visualizing either a positive or negative polarity by use of two different colours, illustrated as different shades of grey.

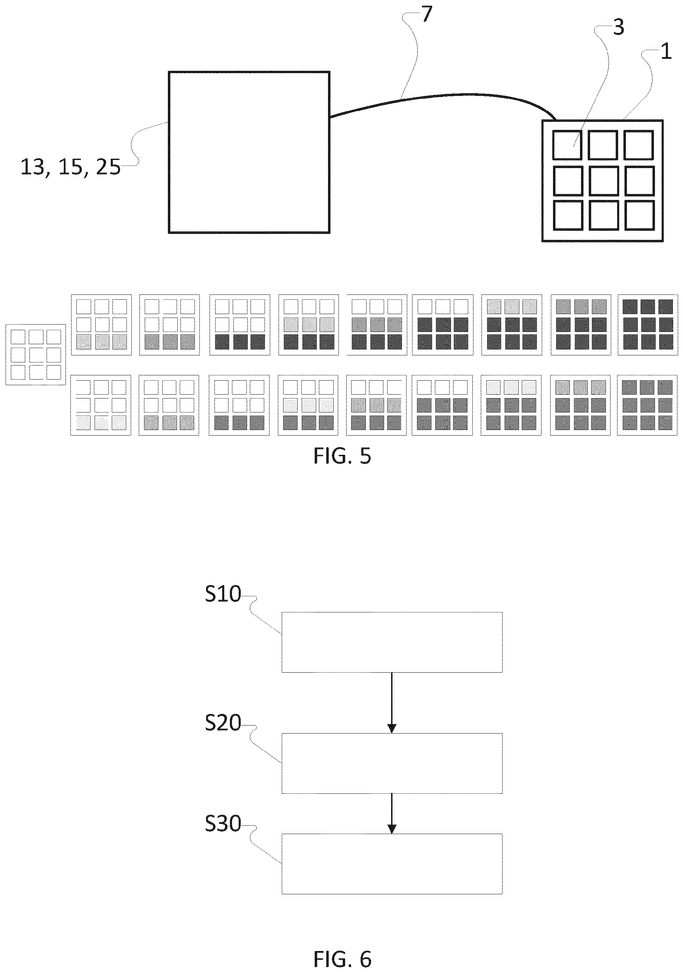

Fig. 5 shows an embodiment in which the light matrix building block 1 is connected to a building block device 13, which outputs a relative value that can be visualized as a value in a minus 10 to plus 10 range.

For example, the building block device 13 may be a smart battery device 25, i.e. a battery device that is capable of digital communication, or it may be a hub device 15. As described above in relation to fig. 4, the light matrix building block 1 can detect if it is connected to a battery device 25 and detect the polarity of the battery device. The smart battery device 25 provides the digital information needed for the light matrix building block 1 to visualize the power level of the battery. For a positive polarity the colour may be green and to visualize the power level the intensity of the green colour could increase with increasing power level, for example as shown by the intensity increasing in each vertical line until reaching a maximum value. Similarly, a negative polarity may be shown using a red colour and increasing intensity to show increasing battery level. In this way a red or green bar graph for the power level is produced. In fig. 5 the different colours and intensities are illustrated as different shades of grey.

Fig. 6 shows a flow diagram of a method of communication between a light matrix building block 1 and a building block device 13 according to some embodiments. The light matrix building block 1 has a plurality of separate light emitting elements 3 and is configured to control the colour and intensity of each of the light emitting elements 3 individually.

In step S10, the building block device 13 provides digital information to the light matrix building block 1, where the digital information to regulate the colour and intensity of a light emitting element 3 in the plurality of light emitting elements is encoded in a single byte of information. The building block device 13 could be e.g. a building block hub device 15 or a building block smart battery device 25 as described in connection with figs. 2, 3 and 5. In step S20, the light matrix building block 1 receives and decodes the digital information and in step S30, the light matrix building block 1 regulates the colour and intensity of each of the light emitting elements 3 according to the digital information received.

The descriptions for figs. 1-5 provides examples of how the output from a building block device 13 may be visualized using the light matrix building block 1.

### LIST OF REFERENCE NUMBERS

- 1: Light matrix building block
- 3: Light emitting element
- 5: Matrix of light emitting elements
- 7: Connection cable
- 9: Connector
- 11: Attachment parts
- 13: Building block device
- 15: Building block hub device
- 17: Tablet
- 19: Wireless connection
- 21: Building block device outputting discrete value
- 23: Building block battery device
- 25: Building block smart battery device

## Claims

1. A light matrix building block (1) for a modular toy or educational construction set, the light matrix building block (1) comprising a plurality of separate light emitting elements, the light matrix building block (1) being configured to:
- control the colour and intensity of each of the light emitting elements (3) individually, and
- receive and decode digital information to regulate the colour and intensity of each of the light emitting elements,
**characterised in that**
the digital information to regulate the colour and intensity of a light emitting element (3) in the plurality of light emitting elements is encoded in a single byte of information.

2. A light matrix building block according to claim 1, wherein the light matrix building block is further configured to decode digital information, wherein intensity and colour coded information is provided as an indexed intensity and indexed colour, respectively.

3. A light matrix building block according to any of the previous claims, wherein the light matrix building block is further configured to decode digital information, wherein intensity coded information and colour coded information are each encoded in 4 bits.

4. A light matrix building block according to any of the previous claims, wherein the plurality of light emitting elements are arranged on a 2D grid.

5. A light matrix building block according to any of the previous claims, wherein the light matrix building block is further configured to receive the digital information via a wired connection.

6. A light matrix building block according to any of the previous claims, wherein the light matrix building block is further configured to determine whether a connected building block device can provide power to an electronically connected building block, and whether it is configured for digital communication.

7. A light matrix building block according to any of the previous claims, wherein the light matrix building block is further configured to regulate the colour and intensity of each of the light emitting elements according to a status of a connected building block device.

8. A modular toy or educational construction set comprising a light matrix building block according to any of claims 1 - 7 and a building block device, wherein the light matrix building block and the building block device are configured to be electronically connected with each other.

9. A modular toy or educational construction set according to claim 8, wherein the building block device is a building block hub device, which is configured to encode digital information intended for the light matrix building block.

10. A modular toy or educational construction set according to any of claims 8 or 9, wherein the building block device is a building block hub device, which is configured to wirelessly receive digital information intended for the light matrix building block.

11. A modular toy or educational construction set according to claim 10, wherein the building block hub device is further configured to receive the digital information intended for the light matrix building block as a single Bluetooth Low Energy (BLE) message.

12. A modular toy or educational construction set according to claim 8, wherein the building block device is a building block battery device.

13. A method of communication between a light matrix building block and a building block device, the light matrix building block comprising a plurality of separate light emitting elements, and being configured to control the colour and intensity of each of the light emitting elements individually, the method comprising:
- providing, by the building block device, digital information to the light matrix building block,
- receiving and decoding, by the light matrix building block, of the digital information,
- regulating, by the light matrix building block, the colour and intensity of each of the light emitting elements according to the received digital information,
**characterised in that**
the digital information to regulate the colour and intensity of a light emitting element in the plurality of light emitting elements is encoded in a single byte of information.

14. A method of communication according to claim 13, wherein the intensity and colour coded information is provided as an indexed intensity and indexed colour, respectively.

15. A method of communication according to any of claim 13 or 14, wherein the intensity coded information and colour coded information are each encoded in 4 bits.

## Patentansprüche

1. Lichtmatrix-Baustein (1) für ein modulares Spielzeug oder einen erzieherischen Bausatz, wobei der Lichtmatrix-Baustein (1) eine Vielzahl von separaten lichtemittierenden Elementen umfasst und der Lichtmatrix-Baustein (1) konfiguriert ist, um:
- die Farbe und Intensität jedes der lichtemittierenden Elemente (3) einzeln zu steuern, und
- digitale Informationen zu empfangen und zu decodieren, um die Farbe und Intensität jedes der einzelnen lichtemittierenden Elemente zu regeln,
**dadurch gekennzeichnet, dass** die digitalen Informationen, um die Farbe und Intensität eines lichtemittierenden Elements (3) in der Vielzahl von lichtemittierenden Elementen zu regeln, in einem einzigen Byte an Informationen codiert sind.

2. Lichtmatrix-Baustein nach Anspruch 1, wobei der Lichtmatrix-Baustein weiter konfiguriert ist, um digitale Informationen zu decodieren, wobei intensitäts- und farbcodierte Informationen als indexierte Intensität bzw. indexierte Farbe bereitgestellt sind.

3. Lichtmatrix-Baustein nach einem der vorstehenden Ansprüche, wobei der Lichtmatrix-Baustein weiter konfiguriert ist, um digitale Informationen zu decodieren, wobei intensitätscodierte Informationen und farbcodierte Informationen jeweils in 4 Bits codiert sind.

4. Lichtmatrix-Baustein nach einem der vorstehenden Ansprüche, wobei die Vielzahl von lichtemittierenden Elementen auf einem 2D-Raster angeordnet ist.

5. Lichtmatrix-Baustein nach einem der vorstehenden Ansprüche, wobei der Lichtmatrix-Baustein weiter konfiguriert ist, um die digitalen Informationen über eine kabelgebundene Verbindung zu empfangen.

6. Lichtmatrix-Baustein nach einem der vorstehenden Ansprüche, wobei der Lichtmatrix-Baustein weiter konfiguriert ist, um zu bestimmen, ob eine verbundene Bausteinvorrichtung einem elektronisch verbundenen Baustein Strom bereitstellen kann und ob sie für digitale Kommunikation konfiguriert ist.

7. Lichtmatrix-Baustein nach einem der vorstehenden Ansprüche, wobei der Lichtmatrix-Baustein weiter konfiguriert ist, um die Farbe und Intensität jedes der lichtemittierenden Elemente entsprechend dem Status einer verbundenen Bausteinvorrichtung zu regeln.

8. Modulares Spielzeug oder erzieherischer Bausatz, umfassend einen Lichtmatrix-Baustein nach einem der Ansprüche 1-7 und eine Bausteinvorrichtung, wobei der Lichtmatrix-Baustein und die Bausteinvorrichtung konfiguriert sind, um elektronisch miteinander verbunden zu werden.

9. Modulares Spielzeug oder erzieherischer Bausatz nach Anspruch 8, wobei die Bausteinvorrichtung eine Baustein-Hub-Vorrichtung ist, die konfiguriert ist, um digitale Informationen zu kodieren, die für den Lichtmatrix-Baustein bestimmt sind.

10. Modulares Spielzeug oder erzieherischer Bausatz nach einem der Ansprüche 8 oder 9, wobei die Bausteinvorrichtung eine Baustein-Hub-Vorrichtung ist, die konfiguriert ist, um drahtlos digitale Informationen zu empfangen, die für den Lichtmatrix-Baustein bestimmt sind.

11. Modulares Spielzeug oder erzieherischer Bausatz nach Anspruch 10, wobei die Baustein-Hub-Vorrichtung weiter konfiguriert ist, um die für den Lichtmatrix-Baustein bestimmten digitalen Informationen als einzelne Bluetooth Low Energy (BLE)-Nachricht zu empfangen.

12. Modulares Spielzeug oder erzieherischer Bausatz nach Anspruch 8, wobei die Bausteinvorrichtung eine Bausteinbatterievorrichtung ist.

13. Verfahren zum Kommunizieren zwischen einem Lichtmatrix-Baustein und einer Bausteinvorrichtung, wobei der Lichtmatrix-Baustein eine Vielzahl von separaten lichtemittierenden Elementen umfasst und konfiguriert ist, um die Farbe und Intensität jedes der lichtemittierenden Elemente einzeln zu steuern, wobei das Verfahren umfasst:
- Bereitstellen digitaler Informationen durch die Bausteinvorrichtung für den Lichtmatrix-Baustein,
- Empfangen und Decodieren der digitalen Informationen durch den Lichtmatrix-Baustein,
- Regeln der Farbe und Intensität jedes der lichtemittierenden Elemente durch den Lichtmatrix-Baustein entsprechend der empfangenen digitalen Informationen,
**dadurch gekennzeichnet, dass** die digitalen Informationen, um die Farbe und Intensität eines lichtemittierenden Elements in der Vielzahl von lichtemittierenden Elementen zu regeln, in einem einzigen Byte an Informationen codiert sind.

14. Verfahren zum Kommunizieren nach Anspruch 13, wobei die intensitäts- und farbcodierten Informationen als indexierte Intensität bzw. indexierte Farbe bereitgestellt werden.

15. Verfahren zum Kommunizieren nach einem von Anspruch 13 oder 14, wobei die intensitätscodierten Informationen und die farbcodierten Informationen jeweils in 4 Bits codiert sind.

## Revendications

1. Bloc de construction à matrice de lumière (1) pour un jouet modulaire ou un jeu de construction éducatif, le bloc de construction à matrice de lumière (1) comprenant une pluralité d'éléments électroluminescents séparés, le bloc de construction à matrice de lumière (1) étant configuré pour :
- commander la couleur et l'intensité de chacun des éléments électroluminescents (3) individuellement, et
- recevoir et décoder des informations numériques pour réguler la couleur et l'intensité de chacun des éléments électroluminescents,
**caractérisé en ce que** les informations numériques pour réguler la couleur et l'intensité d'un élément électroluminescent (3) dans la pluralité d'éléments électroluminescents sont codées dans un seul octet d'informations.

2. Bloc de construction à matrice de lumière selon la revendication 1, dans lequel le bloc de construction à matrice de lumière est en outre configuré pour décoder des informations numériques, dans lequel des informations codées d'intensité et de couleur sont fournies sous la forme d'une intensité indexée et d'une couleur indexée, respectivement.

3. Bloc de construction à matrice de lumière selon l'une quelconque des revendications précédentes, dans lequel le bloc de construction à matrice de lumière est en outre configuré pour décoder des informations numériques, dans lequel les informations codées d'intensité et les informations codées de couleur sont chacune codées en 4 bits.

4. Bloc de construction à matrice de lumière selon l'une quelconque des revendications précédentes, dans lequel la pluralité d'éléments électroluminescents sont agencés sur une grille 2D.

5. Bloc de construction à matrice de lumière selon l'une quelconque des revendications précédentes, dans lequel le bloc de construction à matrice de lumière est en outre configuré pour recevoir les informations numériques via une connexion filaire.

6. Bloc de construction à matrice de lumière selon l'une quelconque des revendications précédentes, dans lequel le bloc de construction à matrice de lumière est en outre configuré pour déterminer si un dispositif de bloc de construction connecté peut fournir de l'énergie à un bloc de construction connecté électroniquement, et s'il est configuré pour une communication numérique.

7. Bloc de construction à matrice de lumière selon l'une quelconque des revendications précédentes, dans lequel le bloc de construction à matrice de lumière est en outre configuré pour réguler la couleur et l'intensité de chacun des éléments électroluminescents en fonction d'un état d'un dispositif de bloc de construction connecté.

8. Jouet modulaire ou jeu de construction éducatif comprenant un bloc de construction à matrice de lumière selon l'une quelconque des revendications 1-7 et un dispositif de bloc de construction, dans lequel le bloc de construction à matrice de lumière et le dispositif de bloc de construction sont configurés pour être connectés électroniquement l'un à l'autre.

9. Jouet modulaire ou jeu de construction éducatif selon la revendication 8, dans lequel le dispositif de bloc de construction est un dispositif concentrateur de bloc de construction, qui est configuré pour coder des informations numériques destinées au bloc de construction à matrice de lumière.

10. Jouet modulaire ou jeu de construction éducatif selon l'une quelconque des revendications 8 ou 9, dans lequel le dispositif de bloc de construction est un dispositif concentrateur de bloc de construction, qui est configuré pour recevoir sans fil des informations numériques destinées au bloc de construction à matrice de lumière.

11. Jouet modulaire ou jeu de construction éducatif selon la revendication 10, dans lequel le dispositif concentrateur de bloc de construction est en outre configuré pour recevoir les informations numériques destinées au bloc de construction à matrice de lumière sous la forme d'un seul message Bluetooth à basse consommation (BLE).

12. Jouet modulaire ou jeu de construction éducatif selon la revendication 8, dans lequel le dispositif de bloc de construction est un dispositif de batterie de bloc de construction.

13. Procédé de communication entre un bloc de construction à matrice de lumière et un dispositif de bloc de construction, le bloc de construction à matrice de lumière comprenant une pluralité d'éléments électroluminescents séparés, et étant configuré pour commander la couleur et l'intensité de chacun des éléments électroluminescents individuellement, le procédé comprenant :
- la fourniture, par le dispositif de bloc de construction, d'informations numériques au bloc de construction à matrice de lumière,
- la réception et le décodage, par le bloc de construction à matrice de lumière, des informations numériques,
- la régulation, par le bloc de construction à matrice de lumière, de la couleur et l'intensité de chacun des éléments électroluminescents en fonction des informations numériques reçues,
**caractérisé en ce que** les informations numériques pour réguler la couleur et l'intensité d'un élément électroluminescent dans la pluralité d'éléments électroluminescents sont codées dans un seul octet d'informations.

14. Procédé de communication selon la revendication 13, dans lequel les informations codées d'intensité et de couleur sont fournies sous la forme d'une intensité indexée et d'une couleur indexée, respectivement.

15. Procédé de communication selon l'une quelconque des revendications 13 ou 14, dans lequel les informations codées d'intensité et les informations codées de couleur sont chacune codées en 4 bits.
